Europäisches Patentamt

European Patent Office

Office européen des brevets

(11) Veröffentlichungsnummer: **0 231 810**
**A1**

(12) **EUROPÄISCHE PATENTANMELDUNG**

(21) Anmeldenummer: 87100762.1

(22) Anmeldetag: 21.01.87

(51) Int. Cl.³: **F 21 Q 1/00**
**B 60 Q 1/26**

(30) Priorität: 23.01.86 FR 8600925

(43) Veröffentlichungstag der Anmeldung:
12.08.87 Patentblatt 87/33

(84) Benannte Vertragsstaaten:
DE ES FR GB IT

(71) Anmelder: NEIMAN
39 Avenue Marceau
F-92400 Courbevoie(FR)

(72) Erfinder: Duneau, André
12, Rue de la Sablonnière
F-27000 Evreux(FR)

(74) Vertreter: Patentanwaltsbüro Cohausz & Florack
Postfach 14 01 47
D-4000 Düsseldorf 1(DE)

(54) Signalleuchte mit abnehmbarer Abdeckscheibe für Kraftfahrzeuge.

(57) Die Erfindung bezieht sich auf eine Signalleuchte für Kraftfahrzeuge, umfassend einen durch eine mehrfarbige Abdeckscheibe geschlossenen Sockel, wobei die Abdeckscheibe abnehmbar ist.

Die erfindungsgemäße Leuchte ist dadurch gekennzeichnet, daß die Abdeckscheibe (7) am Umfang einen Befestigungsflansch (9) umfaßt, der an der Karosserie (11) des Fahrzeugs über eine Dichtung (12) befestigt ist; der Sockel 1 ist dabei am Befestigungsflansch (9) angebracht.

Anwendung in der Automobilindustrie.

Croydon Printing Company Ltd.

EP 0 231 810 A1

**COHAUSZ & FLORACK**

PATENTANWALTSBÜRO

SCHUMANNSTR. 97 D-4000 DÜSSELDORF 1

Telefon: (0211) 683346 - Telefax: (0211) 6790871 - Telex: 8586513 cop d

PATENTANWÄLTE:

Dipl.-Ing. W. COHAUSZ · Dipl.-Ing. R. KNAUF · Dipl.-Ing. H. B. COHAUSZ · Dipl.-Ing. D. H. WERNER · Dr. rer. nat. B. REDIES

NEIMAN

39, avenue Marceau

F-92400 Courbevoie

20.01.1987

HC/Be 47018EP

1

## SIGNALLEUCHTE MIT ABNEHMBARER ABDECKSCHEIBE FÜR KRAFTFAHRZEUGE

Die Erfindung bezieht sich auf eine Signalleuchte für Kraftfahrzeuge, die einen durch eine mehrfarbige Abdeckscheibe geschlossenen Sockel umfaßt, wobei die Abdeckscheibe abnehmbar ist.

Bei einer bestimmten Anzahl von Signalleuchten ist die Abdeckscheibe an den Sockel geschweißt, um das Ganze abzudichten, und der Sockel ist über eine Dichtung an der Karosserie befestigt. Der Nachteil dieser bekannten Leuchten besteht darin, daß bei einem Bruch nur der Abdeckscheibe die ganze Leuchte erneuert werden muß.

Ebenfalls bekannt sind Leuchten, bei denen die Abdeckscheibe abnehmbar ist. Dort wird die Abdeckscheibe über eine Dichtung an den Sockel geschraubt oder geklammert.

Ziel der Erfindung ist es, eine Leuchte der eingangs beschriebenen Art zu erhalten, bei der nur eine einzige Dichtung verwendet wird und bei der dennoch die Abdeckscheibe vom Sockel abgenommen werden kann.

Zu diesem Zweck ist die erfindungsgemäße Leuchte dadurch gekennzeichnet, daß die Abdeckscheibe an ihrem Umfang einen an der Karosserie des Fahrzeugs über eine Dichtung befestigten Befestigungsflansch umfaßt und der Sockel an diesem Flansch befestigt ist.

Der Sockel kann an den Befestigungsflansch geklammert oder geschraubt werden, und der letztere kann an die Karosserie des Fahrzeugs geschraubt oder geklammert werden.

Vorzugsweise ist der Befestigungsflansch an der Abdeckscheibe angestückt, z. B. durch Schweißen. Diese Lösung bietet den Vorteil, dem Befestigungsflansch eine andere Farbe zu geben, was ein ästhetisches Aussehen gewährleistet mit wirtschaftlicheren Mitteln als Abformen von einem Abguß oder Spritzpressen mit drei oder vier Farben.

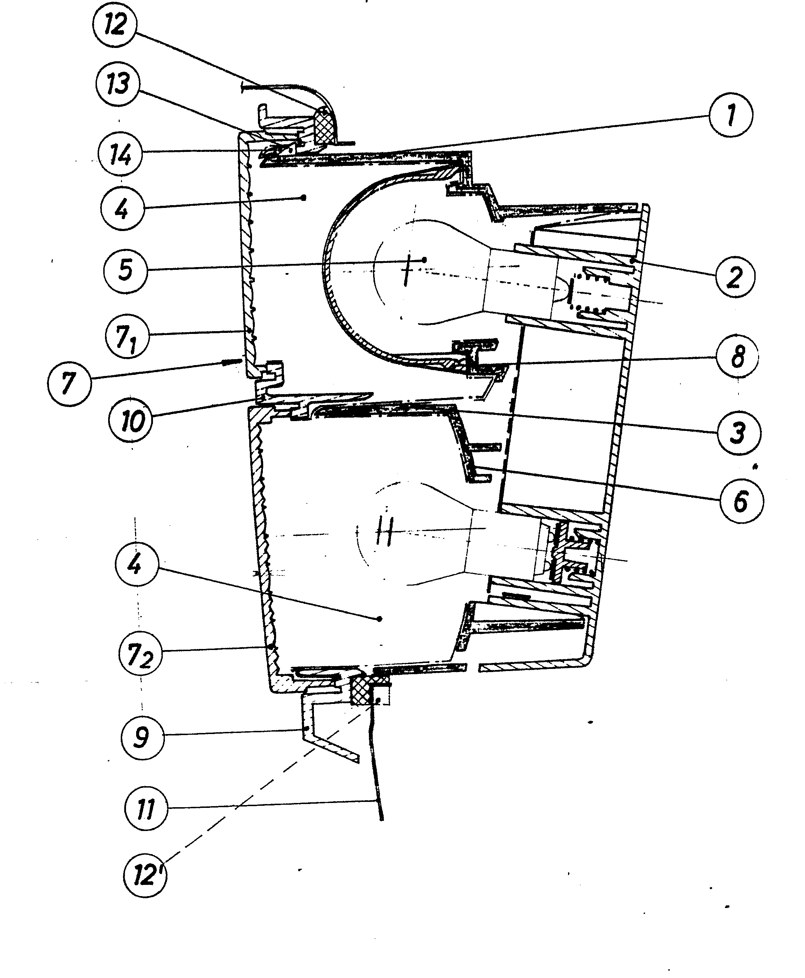

Die Erfindung wird besser verständlich beim Lesen der folgenden Beschreibung unter Bezugnahme auf die beigeheftete Zeichnung, deren einzige Figur eine Schnittansicht der Leuchte nach einem Ausführungsbeispiel der Erfindung ist.

Die erfindungsgemäße Leuchte umfaßt einen Sockel 1, an dem abnehmbar eine Lampenfassung 2 angebracht ist. Der Sockel 1 umfaßt Zwischenwände 3, die Kammern 4 unterteilen, die eine Leuchtanzeigenfunktion durch Einschalten einer Lampe 5 gewährleisten, die in der Lampenfassung 2 in einem im Sockel 1 gebildeten Reflektor 6 sitzt. Der Sockel 1 ist geschlossen durch eine durchsichtige oder lichtdurchlässige Abdeckscheibe 7, die vor den Kammern 4 Leuchtausgänge verschiedener Farben bildet, die für die Signalfunktion kennzeichnend sind (rot, gelb oder weiß). In bekannter Weise kann der Farbton durch eine eingefärbte Haube 8 gegeben werden, die die Lampe umgibt.

Erfindungsgemäß umfaßt die Abdeckscheibe 7 an ihrem Umfang einen Befestigungsflansch 9, der mit ihr eine feste Einheit bildet. Im dargestellten Beispiel umfaßt der Befestigungsflansch 9 Zwischenwände 10, und die Abdeckscheibe 7 besteht aus Einzelgläsern $7_1$, $7_2$, die an ihrem Umfang an den Befestigungsflansch 9 und an dessen Zwischenwände 10 geschweißt sind. Der Befestigungsflansch 9 und seine Zwischenwände 10 trennen auf diese Weise körperlich und sichtbar die Gläser $7_1$, $7_2$ der Abdeckscheibe 7 und erfüllen eine Dekorfunktion, indem sie eine andere Farbe haben, z. B. schwarz oder chromiert. Die Baugruppe Abdeckscheibe 7 mit Befestigungsflansch 9, 10 kann auch hergestellt werden durch Abformen von Abgüssen verschiedener Bauteile oder Spritzpressen mit drei oder vier Farben (wenn die Gläser $7_1$, $7_2$ zwei oder drei verschiedene Farben haben.

0231810

Der Befestigungsflansch 9 ist an der Karosserie 11 über eine Dichtung 12 befestigt (die vor dem Zusammendrücken die Stellung 12'einnimmt). Die Befestigung erfolgt durch Verschrauben oder Verklammern.

Der Sockel 1 ist am Befestigungsflansch 9 befestigt und hängt somit in der Karosserie 11, was dadurch ermöglicht wird, daß der Sockel 1 außer seinem Eigengewicht keine mechanische Beanspruchung erfährt. Im dargestellten Beispiel ist der Sockel 1 durch Verklammern elastischer Spitzen 13 in Löchern 14 des Befestigungsflansches 9 befestigt. Zusätzliche Verklammerungen können vorgesehen werden zwischen dem Sockel 1 und den Zwischenwänden 10 des Befestigungsflansches 9. In einer Variante kann der Sockel 1 an den Befestungsflansch 9 geschraubt werden.

COHAUSZ & FLORACK

PATENTANWALTSBÜRO

SCHUMANNSTR. 97 D-4000 DÜSSELDORF 1

Telefon: (0211) 683346 · Telefax: (0211) 6790871 · Telex: 8586513 cop d

PATENTANWÄLTE:

Dipl.-Ing. W. COHAUSZ · Dipl.-Ing. R. KNAUF · Dipl.-Ing. H. B. COHAUSZ · Dipl.-Ing. D. H. WERNER · Dr. rer. nat. B. REDIES

- 5 -

20.01.1987
HC/Be 47018EP

PATENTANSPRÜCHE

1. - Signalleuchte für Kraftfahrzeuge, umfassend einen durch eine mehrfarbige Abdeckscheibe geschlossenen Sockel, wobei die Abdeckscheibe abgebaut werden kann, dadurch gekennzeichnet, daß die Abdeckscheibe (7) am Umfang einen Befestigungsflansch (9) umfaßt, der an der Karosserie (11) des Fahrzeugs über eine Dichtung (12) angebracht ist, wobei der Sockel(1)am Befestigungsflansch (9) befestigt ist.

2. - Leuchte nach Anspruch 1, dadurch gekennzeichnet, daß die Abdeckscheibe (7) an die Karosserie (11) geklammert ist.

3. - Leuchte nach Anspruch 1, dadurch gekennzeichnet, daß die Abdeckscheibe (7) an die Karosserie (11) geschraubt ist.

4. - Leuchte nach einem der vorhergehenden Ansprüche, dadurch gekennzeichnet, daß der Sockel (1) an den Befestigungsflansch (9) geklammert ist.

5. Leuchte nach einem der Ansprüche 1 - 3, dadurch gekennzeichnet, daß der Sockel (1) an den Befestigungsflansch (9) geschraubt ist.

6. - Leuchte nach einem der vorhergehenden Ansprüche, dadurch gekennzeichnet, daß der Befestigungsflansch (9) Zwischenwände (10) umfaßt, die die Abdeckscheibe (7) bildende Gläser ($7_1$, $7_2$) trennen.

7. - Leuchte nach Anspruch 6. dadurch gekennzeichnet, daß der Sockel (1) zusätzlich an den Zwischenwänden (10) befestigt ist.

8. - Leuchte nach einem der vorhergehenden Ansprüche, dadurch gekennzeichnet, daß der Befestigungsflansch (9) an der Abdeckscheibe (7) angestückt ist, beispielsweise durch Schweißen oder Abformen.

9. - Leuchte nach einem der Ansprüche 1 - 7, dadurch gekennzeichnet, daß der Befestigungsflansch (9) gleichzeitig mit der Abdeckscheibe (7) durch Spritzpressen geformt wird.

0231810

Nummer der Anmeldung

EP 87 10 0762

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | DE-A-1 480 617 (WESTFÄLISCHE METALL) <br> * Seite 2, Zeilen 7-16 * | 1,3-5 | F 21 Q 1/00 <br> B 60 Q 1/26 |
| | --- | | |
| X | FR-A-2 122 180 (FIAT) <br><br> * Figur 3 * | 1,2,4, 6 | |
| | --- | | |
| A | DE-A-1 480 638 (WESTFÄLISCHE METALL) <br> * Figur * | 1,2,4, 9 | |
| | --- | | |
| A | FR-A-2 117 718 (SEIMA) <br> * Figuren 3,4 * | 6,8 | |
| | --- | | |
| A | FR-A-2 482 699 (SIDLER) <br> * Figur 3 * | 7 | RECHERCHIERTE SACHGEBIETE (Int. Cl.4) |
| | ----- | | F 21 Q <br> B 60 Q |

Der vorliegende Recherchenbericht wurde für alle Patentansprüche erstellt.

| Recherchenort | Abschlußdatum der Recherche | Prüfer |
|---|---|---|
| DEN HAAG | 02-04-1987 | FOUCRAY R.B.F. |